# EUROPEAN PATENT APPLICATION

(11) **EP 2 061 179 A1**
(43) Date of publication of application: **20.05.2009**
(21) Application number: 07800935.4
(22) Date of filing: 13.08.2007
(51) Int. Cl.: H04L 9/32

(54) **METHOD, SYSTEM AND PASSWORD MANAGEMENT SERVER FOR MANAGING USER PASSWORD OF NETWORK DEVICE**

(30) Priority: 24.08.2006 CN 200610037182
(71) Applicant: Huawei Technologies Co., Ltd., Shenzhen, Guangdong Province 518129 (CN)
(72) Inventor: LAN, Zhineng, Shenzhen Guangdong 518129 (CN)
(74) Representative: Körber, Martin Hans
(86) International application number: PCT/CN2007/070459
(87) International publication number: WO 2008/025277

(57) **Abstract**

A method for managing user password of network device is disclosed. The said method includes the following steps: based on the information inputted by user, the password management server generates the password request list to request the user password information of network device; the password management server authenticates the request authorization of said password request list by using stored authorization information; after said password request list passes the authentication of request authorization, the password management server outputs the stored user password which is requested in said password request list. A system and password management server, which are used to manage user password of network device, also are disclosed. The said method and system can perform centralized-management for user password, and can compatibly manage the user password of the network devices with different types and the network devices provided by different device providers. The said method and system can efficiently avoid the unauthorized spread for user password.

## Description

This application claims priority to Chinese Patent Application No. 200610037182.5, filed with the Chinese Patent Office on August 24, 2006 and entitled "METHOD, SYSTEM AND PASSWORD MANAGEMENT SERVER FOR MANAGING USER PASSWORDS OF NETWORK DEVICES", which is hereby incorporated by reference in its entirety.

### Field of the Invention

The present invention relates to the field of communication technologies and in particular to a method, system and password management server for managing user passwords of network devices.

### Background of the Invention

Along with rapid development of communication network technologies, communication network is aggrandized in scale, and the number, types, etc of network devices serving in a communication network are also increasing. Accordingly, there are an increasing number of types of maintenance persons for the network devices including customer service persons of network device providers, maintainers of network operators and maintainers of third party network devices. However in view of that the network devices serving in the communication network are provided from the different network device providers, the various network devices differ greatly and there are various maintainers for the network devices so that an intractable problem arises of how to manage effectively user passwords (including usernames and corresponding passwords) in the network devices with which the maintainers log on the network devices.

Two methods for centralized management of user passwords in network devices were proposed in the prior art.

One of the methods is to use a network device management system for centralized management of user passwords in network devices. Generally, the network device management system can offer a function of managing the user passwords of the network devices, and with this function, addition, deletion, password modification, etc of a log-on username of a network device can be enabled. However, a maintainer has to log on the network device for a maintenance task upon failure of the network device management system or communication interruption between the network device management system and the network device. Nevertheless, a usemame and a password for logging on the network device are kept by an individual maintainer or security administrator, and therefore the maintainer can log on the network device for the maintenance task only after obtaining the user password of the network device. After completing the maintenance task for the network device, the user password has to be modified on the network device directly or through the network device management system to prevent abnormal spreading of the user password.

Although this method can enable to some extent effective centralized management of user passwords in network devices, network operators use different network devices provided from different network device providers, and network device management systems are typically designed and developed by the network device providers based upon their own network devices so that the use thereof may be limited to a certain type of network devices and/or to network devices provided by a certain network device provider, and consequently a single network device management system can not enable effective centralized management of user passwords of network devices provided from different providers or different types of network devices provided from the same provider.

A maintainer knowing a user password of a network device may give rise to a possibility of abnormal spreading of the user password, and consequently it is rather difficult to enable secured authorization and auditing of the user password in a single standardized flow.

The other management method is to use an authentication server for centralized management of user passwords. In this method, an authentications server is built in a communication network, and user passwords of all the network devices in the communication network are stored on the authentication server; and a maintainer inputs a user password at a network device, the input user password is transmitted to the authentication server through the protocols of RADIUS, LDAP, TACACS+, etc for authentication, and the maintainer can be allowed to log on the network device for a maintenance task only if the entered user password passes authentication.

This method is convenient for a security administrator in comparison with the first method. Since each user password for logging on a network device has to be authenticated at the authentication server and all the user password information is stored centrally in the authentication server, therefore this method can enable effective centralized management of the user passwords and is particularly convenient for the security administrator to manage the user passwords.

Since the maintainer needs to know only a user password in order to log on any network device managed centrally by the authentication server, this method alleviates the burden of memorizing the user passwords of different network devices on the maintainer and thus is convenient for the maintainer of the network devices.

Since various network devices are in support of inconsistent protocols and not all the network devices are in support of authentication at the authentication server through the protocols of RADIUS, LDAP, TACACS+, and so on. For example, if the IP protocol was not used for transmitting management information of a network device in an optical network, then log-on authentication directly through the protocols of RADIUS, etc would be impossible; and management information of some network devices is transmitted through the SNMP protocol, and this may not support log-on authentication through the protocols of RADIUS, and so on. Consequently, the problem of limited authentication due to the type of a protocol for transmission of management information of a network device may be present and hence necessitate improved compatibility in centralized management of user passwords at the authentication server.

Some network devices are originally in no support of authentication at a centralized log-on authentication server and only in support local log-on authentication, and therefore have to be enabled to support centralized log-on authentication by costly modifying network device interfaces, and so on.

If the network between a network device and the authentication server is disconnected or the connection of the network device to the network has to be disconnected, it may be impossible to log on the authentication server for log-on authentication; and if the network device is also in support of local user authentication, then the drawback of the first method may arise, and consequently, this method may be limited due to the condition of the network connection between the network device and the authentication server.

### Summary of the Invention

Embodiments of the invention provide a method, system and password management server for managing user passwords of network devices, which can manage centrally the user passwords.

The invention provides a method for managing user passwords of network devices, which includes:
generating a password request applying user password information of a network device according to user-input information;
performing application authority authentication of the password request according to authority information stored; and
outputting an applied-for user password of the network device after the application authority authentication of the password request passes.

The invention provides a password management server including:
a data module adapted to store user password information corresponding to user information in network devices and maintainer authority information; and
a password management module adapted to generate from user-input information a password request for applying user password information of a network device, to perform application authority authentication of the password request according to the authority information in the data module; and to extract applied-for user password from the data module in accordance with network device information carried in the password request and output an applied-for user password after the application authority authentication passes.

The invention provides a system for managing user passwords of network devices, which includes at least one network management system each of which manages a plurality of network devices, and a password management server connected with the at least one network management system, in which the password management server includes:
a data module adapted to store user password information in the network devices and maintainer authority information;
a password management module adapted to generate from user-input information a password request applying for the user password information of a network device, to perform application authority authentication of the password request according to the authority information in the data module; and to extract from the data module in accordance with network device information contained in the password request and output an applied-for user password after the application authority authentication passes; and
the network device adapted to authenticate a user-input user password upon receiving the user-input user password.

Since a maintainer is required to apply under an application authority for a user password centrally from the password management server, a standardized password application and management flow can be provided, and the password management server can reset the user password, so that illegal spreading of the user password can be essentially prevented.

Since the password management server manages centrally user passwords of network devices, the maintainer applies for a user password uniformly from the password management server and then logs on the corresponding network device, and the network device verifies the user password without sending the user password to the password management server for verification, different interfaces can be developed in the password management server for interconnection with the network devices, and thus there is good compatibility between the password management server and the network devices, and the password management server can manage different types of network devices provided from different network device providers.

Since the invention uses the password management server for centralized management of user passwords of network devices, the maintainer can apply for a user password from the password management server even if the network connection between the password management server and a network device is disconnected, and the user password can be reset when the network connection between the password management server and the network device is operative. Therefore, the invention can address the drawback in the prior art of the limitation due to the network connection.

### Brief Description of the Drawings

Figure 1 is a schematic diagram of a flow of a method for managing user passwords of network devices in an embodiment of the invention;

Figure 2 is a schematic diagram of a flow of the step of resetting a user password in the flow of the method in Figure 1;

Figure 3 is a schematic diagram of an apparatus for managing user passwords of network devices in an embodiment of the invention; and

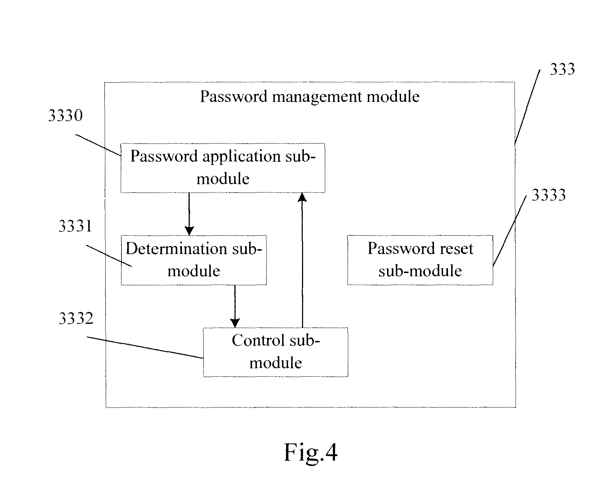

Figure 4 is a schematic diagram of a structure of the password management module in the apparatus illustrated in Figure 3.

### Detailed Description of the Invention

An essential idea of the invention lies in that there are provided a method, system and password management server for managing user passwords of network devices, which can manage centrally the user passwords and can make a process of applying for a user password with which a maintainer logs on a network device independent from a process of verifying the user password for logging on the network device, thereby overcoming the drawbacks in the prior art of poor compatibility between an authentication server and the network device and of failing to conduct authentication upon disconnection of a network between the network device and the authentication server.

The invention will be detailed hereinafter in combination with the embodiments thereof to make the principle, features and advantages of the invention more apparent.

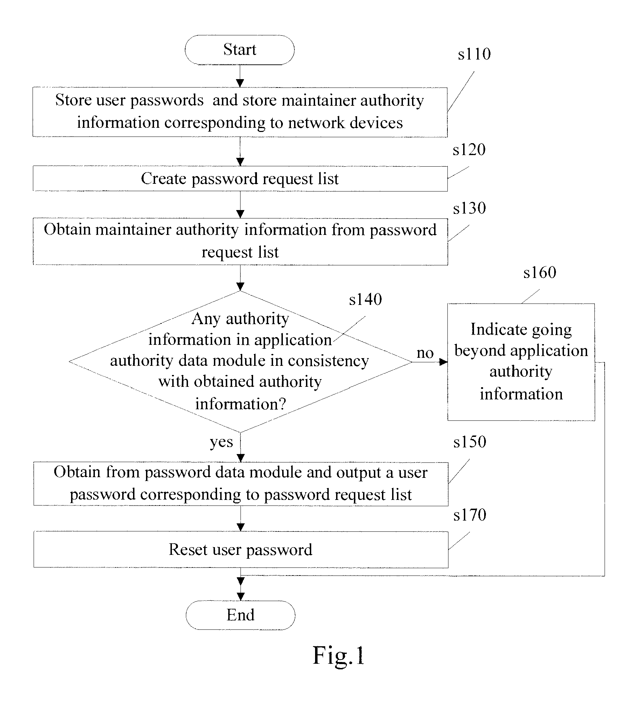

Reference is made to Figure 1 which is a schematic diagram of a flow of a method for managing user passwords of network devices in an embodiment of the invention. A password management server is used for centralization of management of user passwords (including usernames and corresponding passwords) with which a maintainer logs on a network device to be maintained, which includes the following steps.

s110: A password data module is built in the password management server to store usemame information and user password information of each network device. Additionally, an application authority data module is built in the password management server to store maintainer authority information of the network devices.

s120: The maintainer generates a password request list in the password management server from user-input information as required for maintenance of a network device to apply for a device username and user password for logging on the network device or a type of network devices to be maintained. The input information includes at least maintainer information (e.g., name, contact, and so on) and information of the network device to be maintained (e.g., device name, device ID, and so on)

s130: The password management server obtains the corresponding maintainer authority information from the password request list. For example, the obtained maintainer authority information includes at least the maintainer information corresponding to the password request list, the information of the network device to be maintained for which the user password is applied, information of an applied-for maintenance authority of the network device (e.g., read only, read and write, and so on), a period of validity, and so on.

s140: The password management server performs application authority authentication of the password request list, specially, by comparing the obtained maintainer authority information in the password request list with the authority information stored in the application authority database. The user information and user password information of the network device stored in the application authority database can be obtained by inquiring a network management system of each network device provider, and this inquiring process can be conducted in any of the steps prior to the step of performing application authority authentication.

s150: If the maintainer authority information corresponding to the password request list is in consistency with any authority information in the application authority data module, then the application authority authentication passes; the password management server obtains from the password data module and outputs the user name information of the network device and user password information of the network device corresponding to the password request list.

s160: If the maintainer authority information corresponding to the password request list is in no consistency with any authority information in the application authority data module, then the password management server indicates that the password request list goes beyond the application authority information.

s170: The user password corresponding to the password request list is reset when the period of validity of the password request list expires; or the password management server resets the user password in the password data module by a preset condition (e.g., at an interval of time, or when determining restarting of the network device, and so on).

Of course, the password request list includes various information, for example, applicant information, the identifier of the network device to be maintained, the period of validity of the network device to be maintained, and the authority of the network device to be maintained; and a password request list can apply for a user password of a network device, a type of network devices or even network devices provided from a network device provider. Particularly, the period of validity of the network device to be maintained refers to the period of validity of the password request list as mentioned above.

After obtaining the user name and user password of the network device to be maintained, the maintainer can log on the network device to be maintained with the user name and user password, the network device to be maintained authenticates the user password, and the maintainer can perform maintenance operations on the network device after the authentication passes.

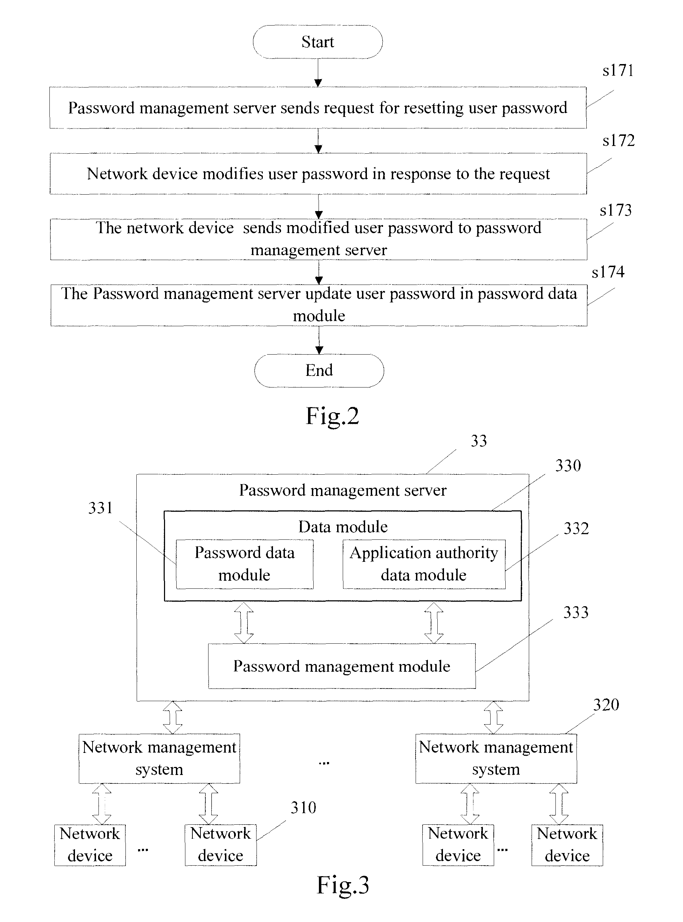

Reference is also made to Figure 2 which is a schematic diagram of a flow of the step of resetting the user password illustrated in Figure 1. Specifically, the step of resetting the user password, s170, includes the following steps.

s171: The password management server sends a request for resetting the user password to the corresponding network device, for example, when the period of validity of the application list expires or by a preset condition (for example, at an interval of time);

s172: The network device corresponding to the user password modifies the user password in response to the request;

s173: The network device sends the modified user password to the password management server; and

s174: The password management server updates the user password in the password database.

With the s170 of resetting the user password, illegal spreading of the user password can be essentially avoided to prevent any person without a proper authority from logging on the network device with the user password.

Furthermore, in a practical communication network, a plurality of network devices are managed by a network management system, and a plurality of network management systems managing numerous network devices are interconnected into a communication network. For an application of the inventive method to a communication network including a plurality of network management systems, it will be sufficient that the password management server is connected with the plurality of network management systems included in the communication network so that information interaction between the password management server and the network devices is enabled by way of the network management systems, detailed descriptions of which will be omitted here.

Since the invention makes the process of applying for a user password with which the maintainer logs on a network device independent from a process of verifying the user password for logging on the network device, the maintainer applies for a user password uniformly from the password management server and then logs on the corresponding network device, and the network device verifies the user password without sending the user password to the password management server for authentication, and therefore, different interfaces can be developed in the password management server for interconnection with network devices, which results in good compatibility between the password management server and the network devices, and the password management server can manage different types of network devices provided from different network device providers.

Furthermore, the password management server can reset the user password, so that illegal spreading of the user password can be essentially prevented.

Still furthermore, since the invention uses the password management server for centralization of management of user passwords of network devices, the maintainer can apply for a user password from the password management server even if the network connection between the password management server and a network device is disconnected, and the user password can be reset while the network connection between the password management server and the network device is operative. Therefore, the invention can overcome the drawback in the prior art of the limitation due to the network connection.

Reference is made to Figure 3. Correspondingly, the invention discloses a system for managing user passwords of network devices, which manages centrally the user passwords with which a maintainer logs on the network devices. The management system includes at least a password management server 33 adapted to manage centrally user passwords of numerous network devices 310 and connected with at least one network management system 320 each of which manages a plurality of network devices 310. The password management server 330 is connected with the network devices 310 through the network management system 320. Since in the invention the network management system 320 just acts as a bridge through which information interaction is enabled between the password management server 330 and the network devices 310 and therefore will be skipped below, and the invention will be set forth in details by way of an example in which information interaction can be enabled directly between the password management server 330 and the network devices 310.

Furthermore, the password management server 330 includes a data module 330 and a password management module 333.

The data module 330 is adapted to store user passwords in the network devices and maintainer authority information. In a practical application, the data module 330 can further include a password data module 331 adapted to store the user passwords in the network devices and an application authority data module 332 adapted to store the maintainer authority information.

The password management module 333 is adapted to generate from user-input information a password request list for applying user password information of a network device, to perform application authority authentication of the password request list according to the authority information in the data module, and to output the user password from the data module for which the password request list applies after the application authority authentication passes.

Specifically, the password management module 333 includes a password application sub-module 3330, a determination sub-module 3331 and a control sub-module 3332.

The password application sub-module 3330 is adapted to provide the maintainer with an interface for creating a password request list, via which the maintainer inputs information (e.g., maintainer information, information of the network device to be maintained, and so on) to thereby generate the password request list, and to display a final application result (e.g., device name information, user password information, etc for a successful application, or application failure information).

The determination sub-module 3331 is adapted to compare the maintainer authority information obtained from the password request list with the authority information stored in the application authority data module.

The control sub-module 3332 is adapted to receive a comparison result of the determination sub-module, to obtain from the password data module the device user name and user password information corresponding to the password request list when the comparison result indicates presence of any of the stored information in consistency with the authority information in the password request list, and to generate information indicative of an application failure (e.g., "Insufficiently authorized user") and output the information to the password application sub-module when the comparison result indicates inconsistency.

In order to prevent effectively illegal spreading of the user password, the password management module 333 further includes a password reset sub-module 3333 adapted to reset the user password for which the password request list applies when the period of validity of the password request list expires or to reset the user password in the password data module by a preset condition (e.g., at an interval of time).

Particularly, the password reset sub-module 3333 sends a request for resetting the user password to the network device 310 corresponding to the user password to be reset, the network device 310 receives the request, resets device usemame of the user password and the user password and sends the reset device username and user password to the password management server 330, and the password management server 330 updates the corresponding information in the password data module 331.

Furthermore in the invention, different interfaces can be developed in the password management server 330 in compliance with different protocols used for the respective network management systems 320 to enable interconnection of the password management server 330 with the plurality of network management systems 320 and also to overcome the drawback in the second method in the prior art of poor compatibility between the authentication server and the various network devices due to the protocols.

The foregoing embodiments are merely illustrative of the principle and features of the invention but not limitative of the invention. Accordingly, those ordinarily skilled in the art shall appreciate that modifications or equivalent substitutions can be made to the invention and that any technical solutions and adaptations thereof without departing from the spirit and scope of the invention shall fall into the scope of the claims appended to the invention.

## Claims

1. A method for managing user passwords of network devices, comprising:
generating a password request for applying user password information of a network device according to user-input information;
performingapplication authority authentication of the password request according to authority information stored; and
outputting an applied-for user password of the network device after the application authority authentication of the password request passes.

2. The method according to claim 1, further comprising:
before outputting the user password, inquiringa connected network management device, obtaining and storing user passwords of the network devices managed by the network management device to output the corresponding user password in response to the password request.

3. The method according to claim 1, wherein the performing application authority authentication of the password request according to authority information stored comprises:
obtaining, maintainer authority information from the password request; comparing the authority information of the password request with the authority information stored, and if the authority information of the password request is in consistency with the stored authority information, passing application authority authentication and outputting the applied-for user password; otherwise failing on application authority authentication of the password request.

4. The method according to any one of claims 1 to 3, wherein after the step of outputting the stored user password, the method further comprises:
requestingto reset the user password of the network device when the period of validity of the password request expires or a preset condition is satisfied, and performing application authority authentication of the password request with the reset user password.

5. The method according to claim 4, wherein the requesting to reset the user password of the network device comprises:
modifying, by the network device, the user password in response to the request for resetting the user password;
sending, by the network device, the modified user password to a password management server; and
updating, by the password management server, the stored user password.

6. The method according to any one of claims 1 to 3, wherein the password request contains at least one of applicant information, the identifier of the network device to be maintained, the period of validity of the network device to be maintained, and the authority of the network device to be maintained.

7. The method according to any one of claims 1 to 3, wherein after the stored user password is output, the method further comprises:
logging on the network device to be maintained with the output user password, and authenticating, by the network device to be maintained, the user password.

8. A password management server, comprising:
a data module adapted to store user password information corresponding to user information in network devices and maintainer authority information; and
a password management module adapted to generate from user-input information a password request for applying user password information of a network device, to perform application authority authentication of the password request according to the authority information in the data module; and to extract from the data module in accordance with network device information carried in the password request and output an applied-for user password after the application authority authentication passes.

9. The password management server according to claim 8, wherein the password management module comprises:
a password application sub-module adapted to generate the password request from the user-input information and to display an application result;
a determination sub-module adapted to compare maintainer authority information in the password request with the authority information in the data module; and
a control sub-module adapted to obtain from the data module in accordance with the network device information contained in the password request and output the applied-for user password when a comparison result of the determination sub-module indicates consistency.

10. The password management server according to claim 9, wherein the password management module further comprises:
a password reset sub-module adapted to request to reset the user password of the network device when a period of validity of the password request expires or a preset condition is satisfied.

11. A system for managing user passwords of network devices, comprising at least one network management system each of which manages a plurality of network devices, and a password management server connected with the at least one network management system, wherein the password management server comprises:
a data module adapted to store user password information in the network devices and maintainer authority information;
a password management module adapted to generate from user-input information a password request for applying user password information of a network device, perform application authority authentication of the password request according to the authority information in the data module; and to extract from the data module in accordance with network device information carried in the password request and output an applied-for user password after passing application authority authentication; and
the network device adapted to authenticate a user-input user password upon receiving the user-input user password.
